# EUROPÄISCHE PATENTANMELDUNG

(11) **EP 1 461 998 A1**
(43) Veröffentlichungstag der Anmeldung: **29.09.2004**
(21) Anmeldenummer: 04450048.6
(22) Anmeldetag: 05.03.2004
(51) Int. Cl.: A01K 83/06

(54) **Angelgerät**

(30) Priorität: 07.03.2003 AT 1542003 U
(71) Anmelder: Kovacs, Franz, 7122 Gols (AT)
(72) Erfinder: Kovacs, Franz, 7122 Gols (AT)
(74) Vertreter: Rippel, Andreas

(57) **Zusammenfassung**

Bei einem Angelgerät ist ein für die Aufnahme eines Köders (1) bestimmter Haken (8) an einer Angelschnur (3) befestigt.

Die Angelschnur (3) ist durch eine zentrale Bohrung (2) eines im wesentlichen kegel- oder pyramidenförmigen Schwimmkörpers (1) geführt, wobei sich der Haken (8) an der Seite der Basis des Schwimmkörpers (1) befindet, wogegen im Bereich der der Basis gegenüberliegenden Seite ein den Schwimmkörper (1) im Wasser nach unten ziehendes Gewicht (4) angeordnet ist.

Dadurch wird eine optimale Lage des Hakens im Wasser erreicht.

## Beschreibung

Die Erfindung bezieht sich auf ein Angelgerät, bei dem ein für die Aufnahme eines Köders bestimmter Haken an einer Angelschnur befestigt ist.

Bei bekannten Angelgeräten ragt der Haken nach unten oder liegt waagrecht am Boden auf. Dadurch kann der Haken im Schilf, Kraut oder dergleichen hängen bleiben und auch das Aufnehmen des am Haken befindlichen Köders durch den Fisch ist nicht immer optimal.

Die Erfindung hat es sich zum Ziel gesetzt, ein Angelgerät zu schaffen, das die aufgezeigten Nachteile nicht aufweist. Dies wird dadurch erreicht, daß die Angelschnur durch eine zentrale Bohrung eines im wesentlichen kegel- oder pyramidenförmigen Schwimmkörpers geführt ist, wobei sich der Haken an der Seite der Basis des Schwimmkörpers befindet, wogegen im Bereich der der Basis gegenüberliegenden Seite ein den Schwimmkörper im Wasser nach unten ziehendes Gewicht angeordnet ist.

Bei einem erfindungsgemäßen Angelgerät ragt der Haken mit dem Köder im Wasser nach oben, weil der Schwimmkörper durch das Gewicht entsprechend gedreht und nach unten gezogen wird.

Das Gewicht könnte z.B. ein Ring sein, der um den Schwimmkörper sich erstreckt. Bei einer bevorzugten Ausführungsform der Erfindung bildet das Gewicht die Spitze des Kegels oder der Pyramide. Dadurch entsteht ein schlanker Körper, der im Schilf oder dergleichen nicht hängen bleibt.

Es ist im Rahmen der Erfindung ferner zweckmäßig, wenn der Einlauf des Hakens in die zentrale Bohrung trichterförmig ausgebildet ist. Dadurch wird eine gute Beweglichkeit des Hakens erleichtert.

Eine solche Beweglichkeit des Hakens wird noch dadurch verstärkt, wenn am schnurseitigen Ende des Hakens ein Anschlag vorgesehen ist, durch den die Hakenspitze im Abstand von der Basis des Schwimmkörpers gehalten ist.

Nachstehend ist die Erfindung anhand eines in den Zeichnungen dargestellten Ausführungsbeispieles näher beschrieben, ohne auf dieses Beispiel beschränkt zu sein. Dabei zeigt
Fig. 1 das erfindungsgemäße Angelgerät beim Liegen auf dem Grund und
Fig. 2 stellt dieses Angelgerät beim Auswerfen knapp vor Auftreffen auf die Wasseroberfläche dar.

Ein Angelgerät nach der Erfindung weist einen aus Holz, Kunststoff oder dergleichen bestehenden Schwimmkörper 1 auf, der im gezeigten Ausführungsbeispiel im wesentlichen die Form eines Kegels hat. Der Schwimmkörper 1 besitzt eine zentrale Bohrung 2, durch welche die Angelschnur 3 geführt ist. Die Spitze des Kegels des Schwimmkörpers 1 wird durch ein Gewicht 4, insbesondere aus Blei gebildet, das eine die Bohrung 2 fortsetzende Bohrung 5 besitzt. Der Durchmesser der Bohrung 5 ist kleiner als der Durchmesser der Bohrung 2.

An der Angelschnur 3 ist ein als Perle ausgebildeter Anschlag 6 und über eine Öse 7 der Angelhaken 8 befestigt. Der Anschlag 6 bzw. die Öse 7 kann in der Bohrung 2 bewegt werden, der Anschlag 6 hindert jedoch ein Eintreten in die Bohrung 5 des Gewichtes 4.

Der Einlauf des Hakens 8 in die zentrale Bohrung 2 ist in Form eines Trichters 9 ausgebildet, sodaß der Haken 8 eine gewisse Beweglichkeit besitzt. Diese Beweglichkeit wird noch dadurch unterstützt, daß der Anschlag 6 ein zu weites Einziehen des Hakens 8 in die Bohrung 2 verhindert, sodaß die Spitze des Hakens 8 in einem Abstand 10 von der Basis des Schwimmkörpers 1 gehalten ist. Am Haken 8 wird in üblicher Weise ein Köder 11 befestigt.

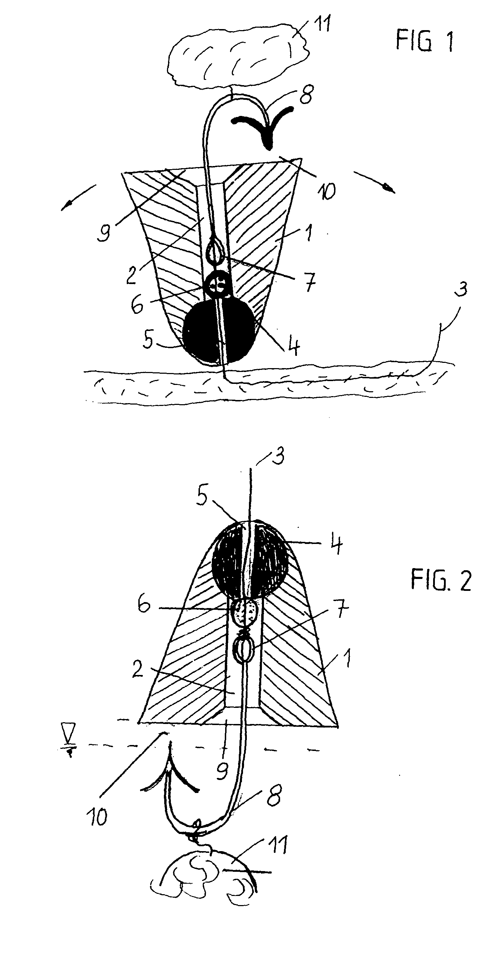

Beim Auswurf des Angelgerätes befindet sich der Haken 8 in der in den Zeichnungen dargestellten Stellung, in der der Anschlag 6 am Gewicht 4 ansteht. Dabei bleibt jedoch der Abstand 10 des Hakens 8 vom Schwimmkörper 1. Beim Auftreffen an der Wasseroberfläche dreht sich das gesamte Gerät und sinkt durch die Schwerkraft des Gewichtes 4 zu Boden. Durch das Gewicht 4 liegt das Gerät direkt auf Grund, ist aber trotzdem durch die Auftriebskraft des Schwimmkörpers 1 in allen Richtungen frei beweglich; dies ist in Fig. 1 angedeutet.

Erfolgt der Biß des Fisches am Köder 11, wird der Köder 11, der Haken 8 und die Angelschnur 3 vom Fisch aufgenommen. Die Angelschnur 3 läuft praktisch widerstandslos durch die Bohrungen 2 und 5 und der Angler erkennt den Biß.

Der Haken 8 wird beim erfindungsgemäßen Angelgerät von unten nach oben dem Fisch zum Biß angeboten. Dadurch kommen die sensiblen Fischlippen nicht mit der Angelschnur in Berührung und der Fisch kann einfacher gehakt werden. Der ständige Abstand 10 zwischen der Spitze des Hakens 8 und der Oberseite des Schwimmkörpers 1 garantiert die freie Beweglichkeit des Hakens 8 in alle Richtungen. Gleichzeitig wirkt der Schwimmkörper 1 als Schutz gegen Hängenbleiben des Hakens im Kraut, Schilf usw.. Durch das gesamte Gewicht des erfindungsgemäßen Angelgerätes ist außerdem ein punktgenaues Werfen zur Anglerstelle möglich.

Im Rahmen der Erfindung sind noch zahlreiche Abänderungen denkbar. So kann der Schwimmkörper 1 auch im wesentlichen pyramidenförmig ausgebildet sein.

## Patentansprüche

1. Angelgerät, bei dem ein für die Aufnahme eines Köders (1) bestimmter Haken (8) an einer Angelschnur (3) befestigt ist, **dadurch gekennzeichnet, daß** die Angelschnur (3) durch eine zentrale Bohrung (2) eines im wesentlichen kegel- oder pyramidenförmigen Schwimmkörpers (1) geführt ist, wobei sich der Haken (8) an der Seite der Basis des Schwimmkörpers (1) befindet, wogegen im Bereich der der Basis gegenüberliegenden Seite ein den Schwimmkörper (1) im Wasser nach unten ziehendes Gewicht (4) angeordnet ist.

2. Angelgerät nach Anspruch 1, **dadurch gekennzeichnet, daß** das Gewicht (4) die Spitze des Kegels oder der Pyramide bildet.

3. Angelgerät nach Anspruch 1 oder 2, **dadurch gekennzeichnet, daß** der Einlauf des Hakens (8) in die zentrale Bohrung (2) trichterförmig ausgebildet ist.

4. Angelgerät nach einem der Ansprüche 1 bis 3, **dadurch gekennzeichnet, daß** am schnurseitigen Ende des Hakens (8) ein Anschlag (6) vorgesehen ist, durch den die Hakenspitze im Abstand von der Basis des Schwimmkörpers (1) gehalten ist.
